# EUROPÄISCHE PATENTSCHRIFT

(11) **EP 1 359 337 B1**
(45) Veröffentlichungstag und Bekanntmachung des Hinweises auf die Patenterteilung: **05.07.2006**
(21) Anmeldenummer: 03009537.6
(22) Anmeldetag: 28.04.2003
(51) Int. Cl.: F16D 65/18

(54) **Zuspannvorrichtung für eine Scheibenbremse**
Actuator for a disc brake
Actionneur pour frein à disque

(30) Priorität: 29.04.2002 DE 10219148
(43) Veröffentlichungstag der Anmeldung: 05.11.2003
(73) Patentinhaber: Wabco Radbremsen GmbH, 68229 Mannheim (DE)
(72) Erfinder: Antony, Paul, 67550 Worms (DE)
(74) Vertreter: Leinweber & Zimmermann

(56) Entgegenhaltungen:
- DE-A- 2 922 472
- DE-U- 8 718 084
- DE-U- 9 218 246

## Beschreibung

Die Erfindung betrifft eine Linearzuspannvorrichtung für eine Scheibenbremse.

Linearzuspannvorrichtungen sind bekannt, beispielsweise aus der DE 44 30 258 C1. Bei dieser Zuspannvorrichtung handelt es sich um eine sogenannte Linearzuspannung, die so ausgebildet ist, daß bereits ausgehend von der Zuspannwelle eine Linearverschiebung des Zuspannelementes erfolgt, bei dem es sich nach der DE 44 30 258 C1 um ein Druckstück handelt, das den Bremsbelag gegen die Bremsscheibe der Scheibenbremse drückt. Eine solche Linearzuspannung hat erhebliche Vorteile gegenüber einer pendelnden Zuspannung.

Weitere Linearzuspannvorrichtungen sind bekannt aus der DE 26 14 321 C2, der EP 614 024 B1 und der EP 589 206 B1. Pendelnde Zuspannvorrichtungen zeigen die DE 92 18 246 U und die DE 87 18 084 U.

Zu der Zuspannvorrichtung nach der DE 44 30 258 C1 gehört das bereits oben erwähnte und sich parallel zur Bremsscheibenebene innerhalb des Bremssattels erstreckende Druckstück, welches mindestens eine verlängerbare Druckspindel aufweist. Das Druckstück ist innerhalb des Bremssattels gegenüber mindestens einer parallel zu einer Bremsenachse liegenden Gleitfläche derart gestützt und geführt, daß es seinerseits die Zuspannwelle über eine entsprechende Lagerung trägt, wobei durch diese Lagerung der Drehpunkt für die Zuspannwelle festgelegt ist. Darüber hinaus stützt sich die Zuspannwelle bremsscheibenabgewandt mittels einer Drehrolle am Ende des Bremssattels ab. Die Zuspannvorrichtung wird mittels mindestens einer Druckfeder gegen die Rückseite des Bremssattels verspannt, wodurch alle Teile aneinanderliegen. Dadurch wird die Zuspannwelle von dem Druckstück getragen.

Alle die oben genannten Zuspannvorrichtungen weisen zur Sicherstellung einer Linearverschiebung entweder eine spezielle Bremsenlagerung oder eine spezielle Bremswellennockenkontur auf. Allen gemeinsam ist dabei, daß ein Abstützelement nach Art einer Linienberührung abgestützt ist. Diese Linienberührung kann je nach Bremswellenlagerung an der Rückseite des Bremssattels (bei einer Drehlagerung im Zuspannelement) oder an dem Zuspannelement (bei Drehlagerung im Bremssattel) ausgebildet sein.

Erfolgt bei diesen Zuspannvorrichtungen eine Verdrehung der Zuspannwelle (mittels eines entsprechenden Drehhebels) durch eine Betätigungseinrichtung, so erfolgt durch die Zuspannwelle eine Wegzunahme, und das Druckstück wird mit mindestens der einen Druckspindel gegen einen Bremsbelag gedrückt. Durch die spezielle Lagerung der Betätigungsnocken aufweisenden Zuspannwelle einerseits und der speziellen Nockenausführung mit einer Drehrolle auf Seiten des Sattels andererseits wird sichergestellt, daß eine weitestgehende Linearbewegung in Richtung der Bremsscheibe erfolgt.

Das oben dargestellte Prinzip hat sich im praktischen Einsatz der Bremsen im wesentlichen bewährt, weil dadurch nachteilige Pendelbewegungen von andersartigen exzentrischen Zuspannungen vermieden werden, bei denen sich die Zuspannwellen um einen ortsfesten Drehpunkt im Bremssattel drehen und das Druckstück tragen.

Die beschriebenen Linearzuspannvorrichtungen sind jedoch im Hinblick auf die Höhe der Zuspannkräfte begrenzt, weil Überlastungen im Anlagebereich der Linienberührung vermieden werden müssen. Zwar wäre eine denkbare Lösung, den Durchmesser des Rollenkörpers oder dessen Baulänge zu vergrößern, damit die Flächenbelastung in der Linienberührung zwischen dem Rollenkörper und der Rollfläche am Bremssattelende nicht über ein zulässiges Grenzmaß hinausgeht; dadurch würde jedoch der Bauraum der Bremse vergrößert, was erhebliche Nachteile mit sich bringt. Darüber hinaus stellen die beschriebenen Linearzuspannvorrichtungen hohe technische Anforderungen an die verwendeten Werkstoffe, die die Anlageflächen bilden. In diesem Zusammenhang sind nämlich immer Härte- und anschließende Schleifprozesse erforderlich. Darüber hinaus sind die zu verwendenden Werkstoffe sehr kostspielig.

Die Linearzuspannvorrichtung nach dem Oberbegriff des Anspruchs 1 ist bekannt aus der DE 29 22 472 A. Dabei liegt zwischen dem als Gleitelement ausgebildeten Abstützelement in Form einer Druckplatte eine Kugel, die auf ihrer der Druckplatte abgewandten Seite von einer Zuspannwelle beaufschlagt wird.

Der Erfindung liegt die Aufgabe zugrunde, die bekannte Linearzuspannvorrichtung derart weiterzubilden, daß mit geringem Herstellungs- (Fertigungs-) und Kostenaufwand eine höhere Zuspannkraft bei minimalem Bauraum erzielt werden kann. Gleichzeitig soll die Zuverlässigkeit bei steigenden Anforderungen an die Zuspannung erhöht werden.

Erfindungsgemäß wird die gestellte Aufgabe dadurch gelöst, daß das Abstützelement auf einer der Zuspannwelle zugewandten Seite eine der ersten oder der zweiten bogenförmigen Abstützfläche komplementäre Kontur hat.

Im Zusammenspiel mit der auf der anderen Seite des Abstützelements vorgesehenen zweiten ebenen Gleitfläche liegt mithin kein Kippglied mit nachteiligen Knick- und Kippmomenten vor, sondern ein gleitendes Entkopplungsteil. Mithin sind auch diejenigen Nachteile vermieden, die mit kippenden Ausgleichsteilen in Kalottenführungen bekannt sind.

Im übrigen wird bei der erfindungsgemäßen Linearzuspannvorrichtung der beispielsweise aus der DE 44 30 258 C1 bekannte Rollenkörper durch eine gleitende Lagerung ersetzt. Der dadurch resultierende Wegfall der Linienberührung und ein Ersatz durch eine flächige Berührung hat eine Verringerung der Flächenpressung zur Folge, wodurch höhere Zuspannkräfte übertragen werden können. Dadurch kann unter Beibehaltung der vorteilhaften Linearzuspannung eine Verringerung der Anforderungen an die verwendeten Werkstoffe erzielt werden. Darüber hinaus sind teure Bearbeitungsprozesse der verwendeten Einzelteile und Materialien (beispielsweise Härten und dergleichen) nicht mehr erforderlich. Diese Bearbeitungsprozesse werden durch Standardbearbeitungen ersetzt. Schließlich wird eine Bauraumminimierung erzielt.

Nach einer weiter bevorzugten Ausführungsform der Erfindung ist vorgesehen, daß das Abstützelement mindestens eine nutförmige Ausnehmung aufweist.

Dadurch wird die Kompaktheit noch einmal erhöht. Darüber hinaus kann die Zuspannwelle in ihrem Querschnitt stabil ausgelegt werden und sie kann mit einem Teil der Umrandung der bogenförmigen Abstützfläche in die Ausnehmung eintauchen, was die Kompaktheit weiter fördert. Selbstverständlich können auch zwei einander gegenüberliegende Ausnehmungen ausgebildet sein.

Bevorzugt ist eine mit der zugehörigen Abstützfläche an der Zuspannwelle zusammenarbeitende Kontur des Abstützelementes kugelförmig, wobei die zugehörige bogenförmige Abstützfläche bevorzugt im wesentlichen nach Art einer Kugelpfanne ausgebildet ist, an der die Kontur flächig anliegt.

Bei dieser Ausgestaltung sind die beiden genannten Teile untereinander auch gegen Axialverschiebung gesichert.

Eine mit der zugehörigen Abstützfläche an der Zuspannwelle zusammenarbeitende Kontur des Abstützelementes kann erfindungsgemäß bevorzugt auch rippenförmig sein.

Auch diese Ausgestaltung erlaubt eine flächige Anlage.

Insbesondere bei Einspindel-Zuspannvorrichtungen ist das Verhältnis der Höhe H des Abstützelementes zu dessen Breite B erfindungsgemäß bevorzugt
H:B ≥ 0,9.

Insbesondere bei Zweispindel-Zuspannvorrichtungen ist das Verhältnis der Höhe H des Abstützelementes zu dessen Breite B erfindungsgemäß bevorzugt
H:B ≥ 1,1.

Im folgenden ist die Erfindung anhand bevorzugter Ausführungsbeispiele unter Bezugnahme auf die beiliegende Zeichnung mit weiteren Einzelheiten näher erläutert. Dabei zeigen
- Figur 1: einen Schnitt senkrecht zur Zuspannachse einer Scheibenbremse mit einer Zuspannvorrichtung in Ruhestellung nach einem Ausführungsbeispiel der Erfindung,
- Figur 1a: eine erste Ausführungsform eines Gleitelementes,
- Figur 2: einen Schnitt senkrecht zur Zuspannachse einer Scheibenbremse mit einer Zuspannvorrichtung in Betätigungsstellung nach einem Ausführungsbeispiel der Erfindung,
- Figur 3: einen Schnitt durch die Scheibenbremse nach Figur 1, wiederum senkrecht zur Zuspannachse, jedoch auch senkrecht zu Figur 1, für den Fall einer Einspindelbremse,
- Figur 3a: eine andere Ausführung des Gleitelements,
- Figur 4: einen Schnitt durch die Scheibenbremse nach Figur 1, wiederum senkrecht zur Zuspannachse, jedoch auch senkrecht zu Figur 1, bei einer Zweispindelbremse,
- Figur 5: die gleiche Ansicht wie Figur 1, jedoch für ein Ausführungsbeispiel, das eine kinematische Umkehr des Ausführungsbeispiels nach Figur 1 darstellt, und
- Figur 6: die gleichen Ansichten wie die Figuren 3 und 4, jedoch für eine andere Ausgestaltung.

Die Figuren zeigen jeweils Scheibenbremsen mit einem Bremssattel 1, der in üblicher Weise mit seinen beiden Schenkeln eine Bremsscheibe 2 übergreift. Beidseits sind Bremsbeläge 3, 4 vorgesehen. Die Zuspannvorrichtung ist allgemein mit der Bezugsziffer 5 bezeichnet, und ist hier rechts der Bremsscheibe 2 gezeigt. Der Bremssattel 1 kann ein Gleitsattel oder ein Festsattel sein.

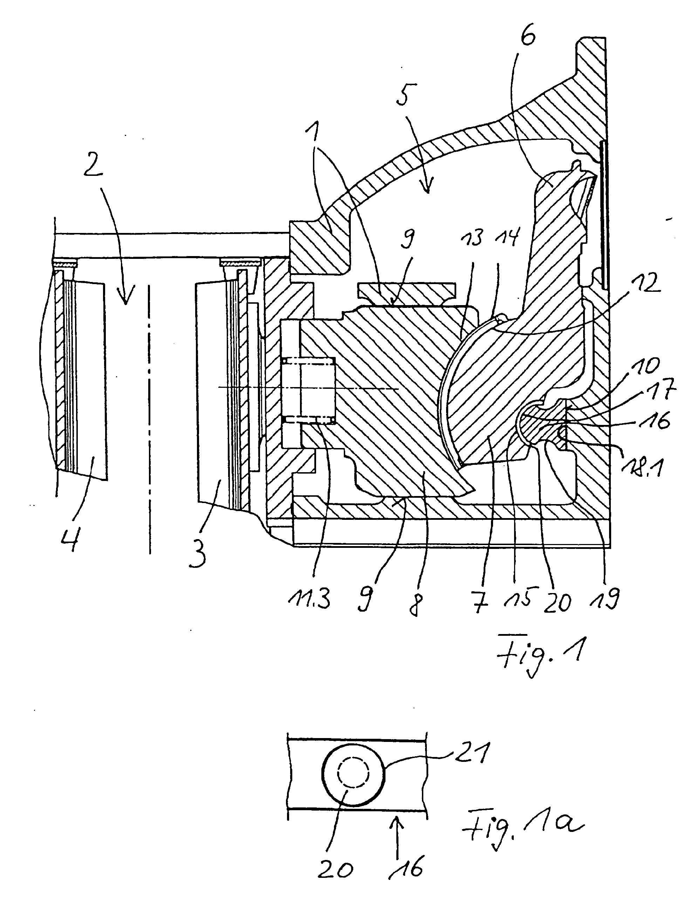

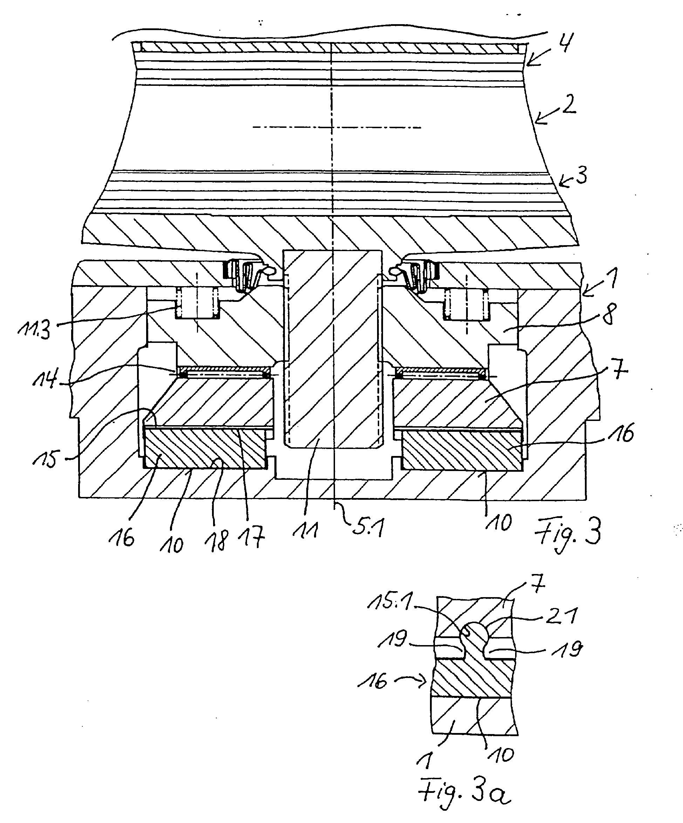

Zu der Zuspannvorrichtung 5 gehört ein Bremshebel 6, der mit einer parallel zur Hauptebene der Bremsscheibe 2 im Bremssattel 1 angeordneten Zuspann- bzw. Bremswelle 7 verbunden ist. Ferner ist ein sich ebenfalls quer zur Bremsscheibenebene erstreckendes und im Bremssattel geführtes Druckstück 8 vorgesehen, vgl. beispielsweise Figur 1. Der Bremshebel 6 stellt die Verbindung zwischen einer eine Kraft einleitenden Betätigungseinrichtung (nicht gezeigt) und der Zuspannwelle 7 dar. Das Druckstück 8 ist mittels parallel zur Bremsenachse liegender Führungen 9 im Bremssattel 1 pendelfrei linear (axial) verschiebbar gelagert, wobei die Führungen 9 jeweils Teillager der Lagerung des Druckstücks 8 im Bremssattel 1 darstellen. Die Bremsenachse liegt parallel zu der Hauptachse der Bremsscheibe 2 und ist beispielsweise in Figur 3 mit der Bezugszahl 5.1 bezeichnet.

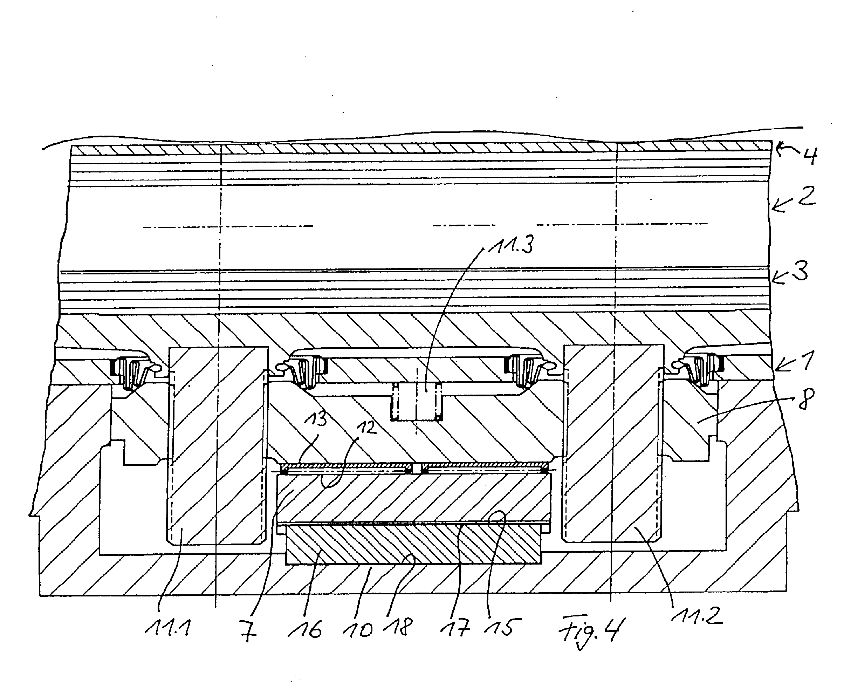

Am Ende des Bremssattels 1 ist eine parallel zur Bremsscheibenebene verlaufende Stützfläche 10 vorgesehen, vgl. beispielsweise Figur 1, deren Länge und Ausführung (geteilt / ungeteilt) dem Bremsenaufbau sowie der Ausführung der Zuspannwelle 7 entspricht. So zeigt beispielsweise Figur 3 eine sogenannte Einspindelbremse, bei der mittig im Druckstück 8 nur eine einzige nachstellbare Druckspindel 11 angeordnet ist. Figur 4 zeigt hingegen eine Zweispindelbremse mit zwei im Druckstück 8 angeordneten Druckspindeln 11.1, 11.2. Die Druckspindeln sind Teil einer Nachstellvorrichtung zum Nachstellen der Bremse im Hinblick auf Bremsbelag- und Bremsscheibenverschleiß.

Die Zuspannvorrichtung 5 wird durch mindestens eine im Bremssattel 1 angeordnete Druckfeder 11.3 derart verspannt, daß alle Funktionsteile gegeneinander und der Bremshebel 6 in seiner Ruhestellung liegen, so daß ein Verrutschen ausgeschlossen ist.

Die Zuspannwelle 7 weist bremsscheibenzugewandt einen etwa halbzylindrischen Nocken oder Ansatz 12 auf. An dem Druckstück 8 ist eine entsprechende innenzylindrische Mantelfläche 13 ausgebildet. Dadurch ist eine drehbare Lagerung der Zuspannwelle 7 in dem Druckstück 8 realisiert. Da sich die Lagerung entlang der Längsachse der Zuspannwelle 7 erstreckt, wird eine gleichmäßige Druckübertragung erzielt. Zwischen dem Ansatz 12 und der Mantelfläche 13 liegt eine Drehlagerung 14 (Gleit- und/oder Wälzlagerung).

Mit zur Drehachse der Zuspannwelle 7 versetztem Mittelpunkt ist in der Zuspannwelle eine innenzylindrische Kontur 15 ausgeformt (vgl. Fig. 1 und 3), die parallel zu dem Ansatz 12 liegt. Der Versatz im Verhältnis zur Länge des Bremshebels 6 bestimmt die Übersetzung der Bremse.

Zwischen der innenzylindrischen Kontur 15 und der Stützfläche 10 des Bremssattels 1 liegt ein Gleitelement 16, das mit einem Teilkreiskopf 17 an der Kontur 15 und mit einem Gleit-Stützfuß 18 mit Gleitfläche 18.1 an der Stützfläche 10 anliegt. Der Teilkreiskopf 17 ist bei den Ausführungen nach den Figuren 3, 4 und 6 rippenförmig, d.h. er erstreckt sich über die gesamte Länge des jeweiligen Gleitelements 16.

Wie bereits in der Beschreibungseinleitung erläutert treten durch diese mit der Drehlagerung 17-15 kombinierte Gleitlagerung keine hohen Flächenbelastungen auf, weshalb spezielle Werkstoffbearbeitungen entfallen können, wie sie etwa bei Linienberührungen erforderlich sind.

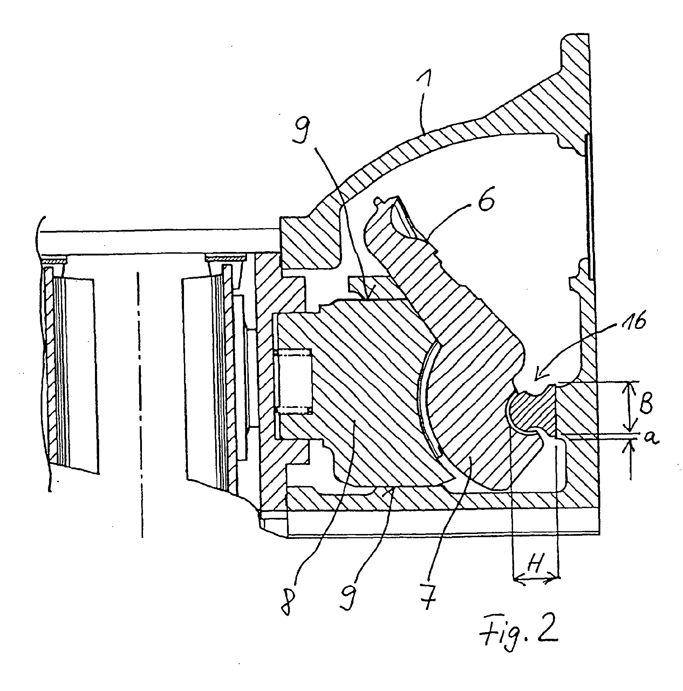

Zwischen dem Teilkreiskopf 17 und dem Gleitfuß 18 des Gleitelements 16 ist eine nutförmige Ausnehmung 19 vorgesehen, die es der die bogenförmige Anlagenfläche mit der Kontur 15 umlaufenden Umrandung erlaubt, darin in der Ruhestellung nach Figur 1 bzw. in der Betätigungsstellung nach Figur 2 einzutauchen. Bei der Ausgestaltung nach den Figuren 3, 4 und 6 bei der sich der Kopfbereich 17 des Gleitelements 16 über die gesamte Länge des Gleitelements 16 erstreckt, also rippenförmig ausgestaltet ist, sind zwei Einschnürungen bzw. nutförmige Ausnehmungen 19 ausgebildet, um Teile der Zuspannwelle in bestimmten Betriebsstellungen aufzunehmen.

Auch zwischen der Kontur 15 und dem Kopfbereich 17 des Gleitelements 16 ist eine Lagerschale 20 zur Verringerung der Reibung vorgesehen.

Wie einem Vergleich der Figuren 3 und 4 miteinander zu entnehmen ist, kann das Gleitelement 16 geteilt oder ungeteilt sein, je nach Ausführung der Zuspannwelle 7. Als besonders vorteilhaft hat es sich erwiesen, den Gleitstein bei Einspindelbremsen mit einem Verhältnis von Höhe H zu Breite B
H:B ≥ 0,9
und bei einer Zweispindelbremse mit einem Verhältnis von
H:B ≥ 1,1
auszubilden.

Der breite Fußbereich 18 im Verhältnis zur Höhe wirkt dabei Kipp- und/oder Knickmomenten im Hinblick auf das Gleitelement 16 entgegen. Darüber hinaus verringert sich durch den breiten Fußbereich 18 die Flächenpressung im Zusammenspiel mit der Stützfläche 10, so daß größere Zuspannkräfte möglich sind.

Mit der in den Figuren 1 und 2 dargestellten Ausführungsform der Erfindung wird erreicht, daß bei einer Verdrehung der Zuspannwelle 7 aus der Ruhestellung nach Figur 1 in die Brems- oder Betätigungsstellung nach Figur 2 sämtliche Teile untereinander drehen. Gleichzeitig mit der Linearverschiebung des in den Lagerungen 9 geführten Druckstücks 8 verändert das Gleitelement 16 mit seinem flächigen Stütz- bzw. Gleitfuß 18 seine Position auf der Stützfläche 10 um den Betrag a (vgl. Figur 2). Es erfolgt hier also eine Relativverschiebung in der entsprechenden Ebene mit einer daraus resultierenden Entkopplung, wodurch die Drehachse sich verschiebt und die Linearzuspannung selbst bei einer Flächenanlage sichergestellt werden kann. Bei Entlastung der Bremse werden über die Druckfeder 11.3 alle Zuspannteile in ihre Ausgangsstellung zurückgeschoben, wobei auch zwangsweise eine Rückversetzung des Gleitelements 16 mit seinem Gleitfuß 18 entlang der Stützfläche 10 in die Ausgangsstellung erfolgt.

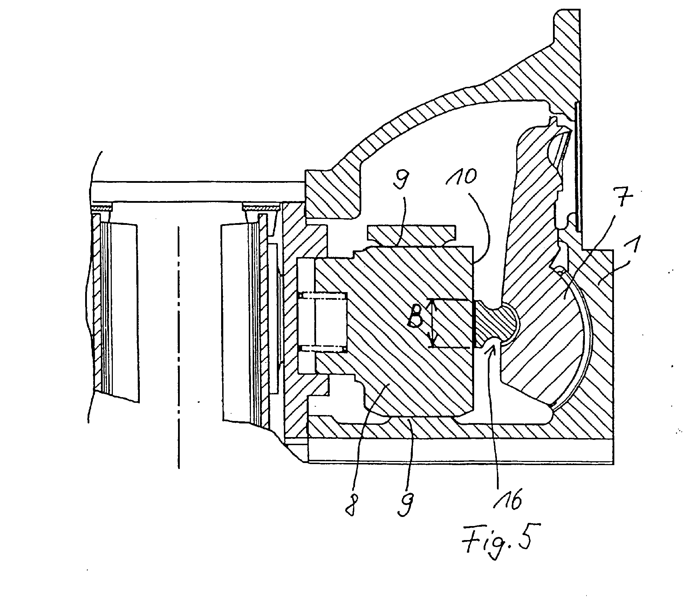

Figur 5 zeigt ein Ausführungsbeispiel der Erfindung in kinematischer Umkehr zu dem Ausführungsbeispiel nach den Figuren 1 und 2. Danach findet die Entkopplung des Fußbereichs 18 des Gleitelements 16 in einer Ebene statt, die durch eine Stützfläche 10 an dem Druckstück 8 gebildet ist und parallel zur Bremsscheibenebene liegt. Wiederum wirkt eine durch diese Gleitentkopplung ermöglichte Relativbewegung zwischen der Zuspannwelle 7 und dem Druckstück 8 einem Verklemmen entgegen. Daher sind die gleichen Vorteile vorhanden wie bei dem Ausführungsbeispiel nach den Figuren 1 und 2, nämlich geringe Flächenpressung, gute Gleiteigenschaften, hohe Zuspannkräfte.

Die Figuren 1a und 3a und zeigen alternative Ausgestaltungen des Kopfbereichs des Gleitelementes 16. Danach ist ein Kugelkopf 21 vorgesehen, der in eine entsprechende pfannenartige Kugelschale 15.1 der Zuspannwelle 7 eingreift. Die Ausnehmung 19 hat hier die Form einer Ringnut.

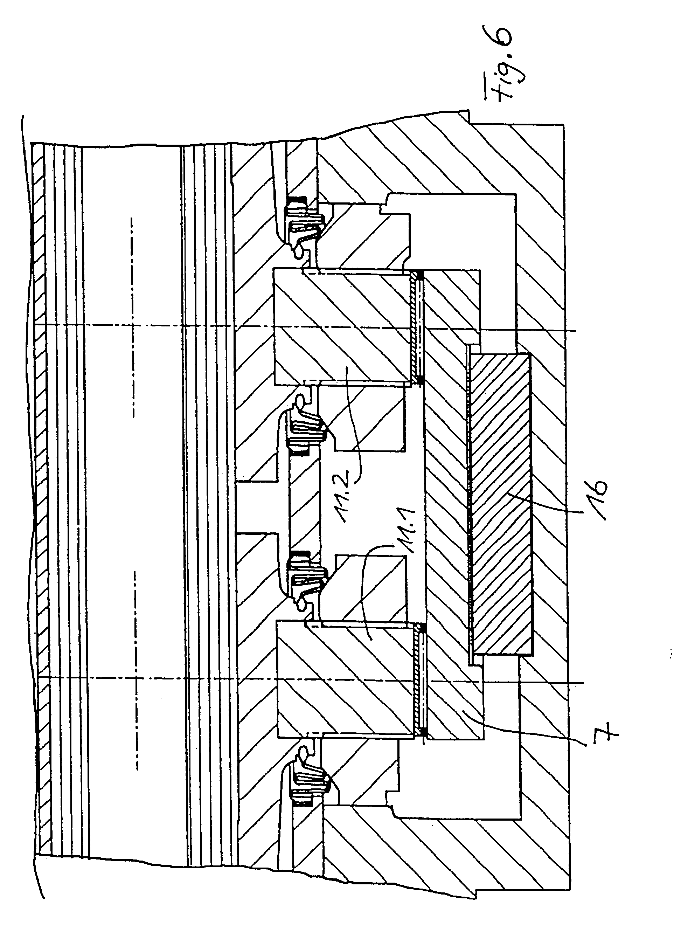

Die Erfindung ist nicht nur anwendbar auf die oben beschriebenen Bremsentypen, d.h. auf solche, bei denen mindestens eine Druckspindel in einem Druckstück gelagert ist und das Druckstück zur Übertragung der Zuspannkräfte dient. Vielmehr kann die Erfindung auch angewendet werden auf Bremsen mit einem Aufbau nach Figur 6, bei dem eine im Bremssattel axial geführte und gelagerte Druckspindeleinrichtung 11.1, 11.2 vorgesehen ist, die direkt von der Zuspannwelle 7 beaufschlagt wird. Auch bei dieser Ausgestaltung sind die Bremswellen-Gleitelementlagerungen in Wechselwirkung möglich, wie sie oben unter Bezugnahme auf die Figuren 1 bis 5 beschrieben sind.

Bevorzugt ist nach der Erfindung vorgesehen, daß insbesondere das Gleitelement 16 entweder gegenüber der Zuspannwelle 7 oder gegenüber der Stützfläche 10 derart gelagert ist, daß eine unerwünschte Axialverschiebung vermieden wird. Alle Gleit- und Drehachsen sowie die Gleitebenen zum Entkoppeln stehen bevorzugt derart zueinander, daß einerseits eine leichtgängige Linearzuspannung sichergestellt ist und andererseits Verspannungen bei einer Betätigung der Bremse vermieden sind. Bei Beibehaltung einer Gleitflächenentkopplung sind alle beschriebenen Lagerungen miteinander beliebig kombinierbar.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Linearzuspannvorrichtung für eine Scheibenbremse, mit
einer quer zu einer Zuspannachse (5.1) liegenden Zuspannwelle (7),
einer ersten Abstützung (12, 13, 14) zum Abstützen der Zuspannwelle (7) an einem entlang der Zuspannachse (5.1) verschieblichen Zuspannelement (8) und
einer zweiten Abstützung (15, 15.1, 17, 20, 21) zum Abstützen der Zuspannwelle (7) an einem Widerlager (1),
wobei die erste und die zweite Abstützung (12, 13, 14; 15, 15.1, 17, 20, 21) jeweils bogenförmige Abstützflächen (12, 15) an der Zuspannwelle (7) aufweisen, deren Krümmungssinne gleich sind, deren gedachte Mittelpunkte jedoch nicht zusammenfallen,
die erste und/oder die zweite Abstützung (12, 13, 14; 15, 15.1, 17, 20, 21) ein quer zur Zuspannachse (5.1) verschiebliches Abstützelement (16) aufweist/aufweisen und
das Abstützelement (16) ein Gleitelement ist, das sich auf einer ersten ebenen Gleitfläche (10) an dem Widerlager (1) oder an dem Zuspannelement (8) mit einer zweiten ebenen Gleitfläche (18.1) abstützt,
**dadurch gekennzeichnet, daß**
das Abstützelement (16) auf einer der Zuspannwelle (7) zugewandten Seite eine der ersten oder der zweiten bogenförmigen Abstützfläche (12, 15, 15.1) komplementäre Kontur (17, 21) hat.

2. Linearzuspannvorrichtung nach Anspruch 1, **dadurch gekennzeichnet, daß** das Abstützelement (16) mindestens eine nutförmige Ausnehmung (19) aufweist.

3. Linearzuspannvorrichtung nach Anspruch 1 oder 2, **dadurch gekennzeichnet, daß** eine mit der zugehörigen Abstützfläche (15.1) an der Zuspannwelle (7) zusammenarbeitende Kontur (21) des Abstützelements (16) kugelförmig ist.

4. Linearzuspannvorrichtung nach einem der vorangehenden Ansprüche, **dadurch gekennzeichnet, daß** eine mit der zugehörigen Abstützfläche (15) an der Zuspannwelle (7) zusammenarbeitende Kontur (17) des Abstützelements (16) rippenförmig ist.

5. Linearzuspannvorrichtung nach einem der vorangehenden Ansprüche, **dadurch gekennzeichnet, daß** das Verhältnis der Höhe H des Abstützelements (16) zu dessen Breite B
H:B ≥ 0,9
ist.

6. Linearzuspannvorrichtung nach einem der vorangehenden Ansprüche, **dadurch gekennzeichnet, daß** das Verhältnis der Höhe H des Abstützelements (16) zu dessen Breite B
H:B ≥ 1,1
ist.

## Claims

1. Linear actuator for a disc brake, with
an actuator shaft (7) arranged transversely to an actuation axis (5.1),
a first support (12, 13, 14) for supporting the actuator shaft (7) on an actuator element (8) that is displaceable along the actuation axis (5.1), and
a second support (15, 15.1, 17, 20, 21) for supporting the actuator shaft (7) on a thrust bearing (1),
wherein the first and second support (12, 13, 14, 15, 15.1, 17, 20, 21) each exhibit arc-shaped supporting surfaces (12, 15) on the actuator shaft, the directions of curvature of which surfaces are identical but the imaginary centres of which do not coincide,
the first and/or the second support (12, 13, 14; 15, 15.1, 17, 20, 21) exhibit/s a support element (16) that is displaceable transversely to the actuation axis (5.1), and
the support element (16) is a sliding element which is supported on a first flat sliding face (10) on the thrust bearing (1) or on an actuator element (8) with a second flat sliding face (18.1),
**characterised in that**
that supporting element (16) has a contour (17, 21) complementary to the first or second arc-shaped supporting surface (12, 15, 15.1) on a side facing the actuator shaft (7).

2. Linear actuator device according to Claim 1, **characterised in that** the support element (16) exhibits at least one groove-shaped recess (19).

3. Linear actuator device according to Claim 1 or 2, **characterised in that** one contour (21) of the support element (16), interacting with the associated support face (15.1) on the actuator shaft (7), is spherical.

4. Linear actuator device according to any one of the preceding claims, **characterised in that** one contour (17) of the support element (16) interacting with the associated support face (15) on the actuator shaft (7) is rib-shaped.

5. Linear actuator device according to one of the preceding claims, **characterised in that** the ratio of the height H of the support element (16) to its width B is
H:B ≥ 0.9

6. Linear actuator device according to one of the preceding claims, **characterised in that** the ratio of the height H of the support element (16) to its width B is
H.B ≥ 1.1

## Revendications

1. Actionneur linéaire pour un frein à disque, avec
un axe d'actionnement (5.1) disposé perpendiculairement à un arbre d'actionnement (7),
un premier appui (12, 13, 14) pour l'appui de l'arbre d'actionnement (7) sur un élément d'actionnement mobile (8) le long de l'axe d'actionnement (5.1),
un deuxième appui (15, 15.1, 17, 20, 21) pour l'appui de l'arbre d'actionnement (7) sur une butée (1),
le premier et le deuxième appui (12, 13, 14 ; 15, 15.1, 17, 20, 21) comportant chacun des surfaces d'appui cintrées (12, 15) sur l'arbre d'actionnement (7), dont les sens de courbure sont identiques et dont les points centraux imaginaires ne coïncident toutefois pas,
le premier et/ou le deuxième appui (12, 13, 14 ; 15, 15.1, 17, 20, 21) comporte/comportent un élément d'appui (16) mobile dans le sens perpendiculaire à l'axe d'actionnement (5.1) et
l'élément d'appui (16) est un élément glissant qui s'appuie sur une première surface glissante (10) plane sur la butée (1) ou sur l'élément d'actionnement (8) avec une deuxième surface glissante plan (18.1),
**caractérisé en ce que**
l'élément d'appui (16) présente sur le côté orienté vers un arbre d'actionnement (7), un contour en complémentarité (17, 21) avec la première ou la deuxième surface d'appui cintrée (12, 15, 15.1).

2. Actionneur linéaire selon la revendication 1, **caractérisé en ce que** l'élément d'appui (16) comporte au moins un évidement rainuré (19).

3. Actionneur linéaire selon l'une quelconque des revendications 1 ou 2, **caractérisé en ce qu'**un contour (21) de l'élément d'appui (16) coopérant avec la surface d'appui correspondante (15.1) sur l'arbre d'actionnement (7) est sphérique.

4. Actionneur linéaire selon l'une quelconque des revendications précédentes, **caractérisé en ce qu'**un contour (17) de l'élément d'appui (16) coopérant avec la surface d'appui correspondante (15) sur l'arbre d'actionnement (7) est cannelé.

5. Actionneur linéaire selon l'une quelconque des revendications précédentes, **caractérisé en ce que** le rapport entre la hauteur H de l'élément d'appui (16) et sa largeur B est
H:B ≥ 0,9.

6. Actionneur linéaire selon l'une quelconque des revendications précédentes, **caractérisé en ce que** le rapport entre la hauteur H de l'élément d'appui (16) et sa largeur B est
H:B ≥ 1,1.
